# EUROPÄISCHE PATENTANMELDUNG

(11) **EP 1 371 527 A1**
(43) Veröffentlichungstag der Anmeldung: **17.12.2003**
(21) Anmeldenummer: 03011010.0
(22) Anmeldetag: 16.05.2003
(51) Int. Cl.: B60R 21/26

(54) **Gasleitungsrohr**

(30) Priorität: 12.06.2002 DE 20209136 U
(71) Anmelder: TRW Occupant Restraint Systems GmbH & Co. KG, 73553 Alfdorf (DE)
(72) Erfinder: Tietze, Hans-Joachim, 73540 Heubach (DE)
(74) Vertreter: Kitzhofer, Thomas, Dipl.-Ing.

(57) **Zusammenfassung**

Ein Gasleitungsrohr für ein Gassackmodul, das wenigstens eine in einer Umfangswandung (12) angeordnete Ausströmöffnung (14) aufweist, wobei der Rand der Ausströmöffnung (14) durch einen stromaufwärtigen Abschnitt (16) und einen stromabwärtigen Abschnitt (18) der Umfangswandung (12), die beide in das Innere (20) des Rohrs (10) ragen, definiert ist, ist dadurch gekennzeichnet, daß der stromabwärtige Abschnitt (18) weiter in das Innere (20) des Rohrs (10) ragt als der stromaufwärtige Abschnitt (16).

## Beschreibung

Die Erfindung betrifft ein Gasleitungsrohr für ein Gassackmodul, das wenigstens eine in einer Umfangswandung angeordnete Ausströmöffnung aufweist, wobei der Rand der Ausströmöffnung durch einen stromaufwärtigen Abschnitt und einen stromabwärtigen Abschnitt der Umfangswandung, die beide in das Innere des Rohrs ragen, definiert ist.

Solche Gasleitungsrohre, auch Gaslanzen genannt, dienen dazu, das zum Aufblasen eines Gassacks erforderliche Gas von einem Gasgenerator zum Gassack zu leiten. Der Haupteinsatzzweck solcher Gaslanzen findet sich bei großflächigen Seitengassäcken. Hier ist es besonders wichtig, den Gassack von mehreren Stellen her möglichst gleichmäßig zu befiillen, damit sich der Gassack schnell entfalten kann. Durch die Gestaltung der in der Umfangswandung der Gaslanze vorgesehenen Ausströmöffnungen läßt sich der Fluß der Gases in den Gassack erhöhen und so die Aufblaszeit des Gassacks verkürzen.

Eine Ausführung der Ausströmöffnungen, mit der dies erreicht werden kann, sind die sogenannten Schöpfkiemen (z.B. DE-U 298 04 004). Hierbei ist ein Teil der Umfangswandung in das Innere des Gasleitungsrohrs gedrückt, so daß eine Leitfläche für das Gas gebildet ist. Nachteilig bei dieser Ausführung ist, daß für eine hohe Partikelfreiheit des Gases gesorgt werden muß, da etwaige in die Gaslanze eingebrachte Partikel mit der Gasströmung mit in den Gassack gerissen werden können.

Eine andere Ausführungsform der Ausströmöffnungen, die nicht so anfällig für den Eintrag von Partikeln in den Gassack ist, sieht vor, daß der gesamte Rand der Ausströmöffnung in das Innere des Rohrs hineingebogen ist. Im Gas befindliche Partikel werden zum großen Teil an der vorstehenden Wandung zurückgehalten. Hier ist allerdings der Durchfluß durch die einzelnen Ausströmöffnungen deutlich geringer als bei der Verwendung von Schöpfkiemen, so daß Mittel zur Erzeugung eines Gegendrucks in der Gaslanze vorgesehen werden müssen, um einen genügend hohen Durchfluß zu gewährleisten.

Die Erfindung schafft ein Gasleitungsrohr, das einen hohen Durchfluß in den Gassack bei einer geringen Anfälligkeit für Partikeleintrag bietet.

Dies wird bei einem oben genannten Gasleitungsrohr dadurch erreicht, daß der stromabwärtige Abschnitt der Umfangswandung weiter in das Innere des Rohrs ragt als der stromaufwärtige Abschnitt. Diese Ausbildung der Ausströmöffnung vereint die Vorteile der Schöpfkiemen mit der des hochgezogenen Rands der Ausströmöffnung. Der hochstehende stromaufwärtige Abschnitt der Umfangswandung verhindert einen Partikeleintrag in den Gassack, während der den stromaufwärtigen Abschnitt überragende stromabwärtige Abschnitt nach Art einer Schöpfkieme eine Leitfläche für die Gasströmung bildet und so den Gasdurchfluß in den Gassack erhöht.

Im Gas befindliche Partikel werden entweder komplett in der Gaslanze zurückgehalten, oder es wird zumindest ihre Bewegungsenergie so weit verringert, daß sie den Gassack nicht beschädigen können.

Bevorzugt ist der stromabwärtige Abschnitt in Längsschnittansicht des Gasleitungsrohrs eine von außen gesehen konkave Einbuchtung, analog der Gestaltung einer Schöpfkieme.

In einer bevorzugten Ausführungsform der Erfindung sind beide Abschnitte zusammenhängend ausgeführt, so daß der gesamte Rand der Ausströmöffnung aus der Fläche der Umfangswandung in das Innere des Rohres hineinragt.

Bevorzugt wird die Ausströmöffnung dadurch gefertigt, daß die Umfangswandung zur Bildung der beiden Abschnitte und der Ausströmöffnung eingedrückt wird. Dies kann vorteilhaft auf einfache und schnelle Art und Weise durch die Verwendung eines Werkzeugstempels geschehen, wobei der vordere Bereich des Werkzeugstempels entsprechend der gewünschten Form der Ausströmöffnung gestaltet ist. Die günstigste Form der Ausströmöffnung bzw. des Werkzeugstempels läßt sich vorteilhaft durch eine Simulation schnell und kostengünstig ermitteln. Auf diese Weise kann die Gaslanze schnell, einfach und kostengünstig an die für den jeweiligen Einsatz geforderten Anforderungen abgestimmt werden. Die Abschnitte verlaufen vorzugsweise halbringförmig und gehen in einer Ebene rechtwinklig zur Strömungsrichtung ineinander über. Die Hälfte näher zur Einströmöffnung in das Rohr ist der stromaufwärtige Abschnitt, die andere Hälfte der stromabwärtige.

Weitere Merkmale und Vorteile der Erfindung ergeben sich aus der nachfolgenden Beschreibung eines Ausführungsbeispiels in Zusammenhang mit den beigefügten Zeichnungen. In diesen zeigen:
- Figur 1 einen schematischen Schnitt durch ein erfindungsgemäßes Gasleitungsrohr;
- Figur 2 eine schematische Draufsicht auf das Gasleitungsrohr aus Figur 1; und
- Figuren 3a, b und 4a, b schematische Ansichten zweier Werkzeugstempel zur Bildung der Ausströmöffnungen einer erfindungsgemäßen Gaslanze von der Seite bzw. in Draufsicht.

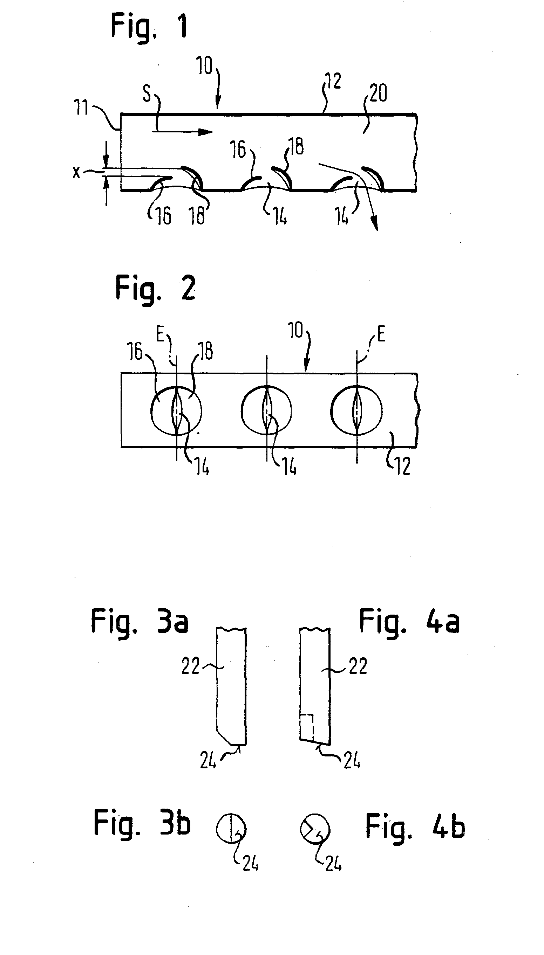

Figur 1 zeigt ein Gasleitungsrohr 10 mit einer Einströmöffnung 11 und einer Umfangswandung 12, in der mehrere voneinander beabstandete Ausströmöffnungen 14 ausgebildet sind. Gas aus einer nicht gezeigten Druckgasquelle strömt mit der Strömungsrichtung S durch das Gasleitungsrohr 10 und aus den Ausströmöffnungen 14 in einen nicht gezeigten Gassack.

Jede der Ausströmöffnungen 14 weist an deren Rand einen stromaufwärtigen Abschnitt 16 und einen stromabwärtigen Abschnitt 18 auf. Beide Abschnitte 16, 18 des Rands der Ausströmöffnung 14 gehen ineinander über und ragen in das Innere 20 des Gasleitungsrohrs 10 hinein. Der Übergang der Abschnitte 16, 18 erfolgt in einer Ebene E senkrecht zur Strömungsrichtung S, die der Mittelachse des Rohres an der Ausströmöffnung 14 entspricht. Der stromabwärtige Abschnitt 18 überragt den stromaufwärtigen Abschnitt 16 um einen Betrag x, so daß ein Spalt gebildet ist, durch den das Gas aus der Ausströmöffnung 14 ausströmt. (Siehe Pfeil in Figur 1). Der stromabwärtige Abschnitt 18 ist, analog zur Form einer Schöpfkieme, im Längsschnitt konkav, so daß er eine Leitfläche für das Gas bildet.

Wie in Figur 2 angedeutet ist, ragt der gesamte Rand der Ausströmöffnung 14 in das Rohrinnere 20 hinein. Etwaige im Gas befindliche Partikel werden durch den in das Rohrinnere 20 hineinragenden Rand der Ausströmöffnungen 14, insbesondere vom hier konvex geformten stromaufwärtigen Abschnitt 16 entweder im Gasleitungsrohr 10 komplett zurückgehalten oder in ihrer Bewegungsenergie verringert. Der als Leitfläche ausgebildete stromabwärtige Abschnitt 18 bewirkt eine Einleitung von Gas in den Gassack, so daß trotz der ins Rohrinnere ragenden Ränder der Ausströmöffnungen 14 auf die Erzeugung eines Gegendrucks im Gasleitungsrohr 10 zur schnellen Befüllung des Gassacks verzichtet werden kann.

In der hier gezeigten Ausführungsform werden die Ausströmöffnungen 14 dadurch gebildet, daß die Umfangswandung 12 durch einen Werkzeugstempel 22 nach innen eingedrückt wird. Die Figuren 3a bis 4b zeigen zwei mögliche Ausbildungen eines solchen Stempels 22. Der in Figur 3a und 3b gezeigte Werkzeugstempel 22 hat einen runden Querschnitt und weist auf der Stirnfläche 24 eine Abschrägung auf, die die Hälfte der Stirnfläche einnimmt. Der in den Figuren 4a und 4b gezeigte Werkzeugstempel 22 weist eine sektorförmige Ausnehmung auf, die sich bis zu einer vorbestimmten Tiefe erstreckt. Durch die Gestaltung der Stirnflächen 24 des Werkzeugstempels 22 bzw. des sich daran anschließenden vorderen Abschnitts des Werkzeugstempels 22 kann die Gestaltung der Ausströmöffnungen 14 und der beiden Abschnitte 16, 18 auf einfache Weise festgelegt werden. Insbesondere läßt sich die Größe x des Spalts gezielt einstellen.

## Patentansprüche

1. Gasleitungsrohr für ein Gassackmodul, das wenigstens eine in einer Umfangswandung (12) angeordnete Ausströmöffnung (14) aufweist, wobei der Rand der Ausströmöffnung (14) durch einen stromaufwärtigen Abschnitt (16) und einen stromabwärtigen Abschnitt (18) der Umfangswandung (12), die beide in das Innere (20) des Rohrs (10) ragen, definiert ist, **dadurch gekennzeichnet, daß**
der stromabwärtige Abschnitt (18) weiter in das Innere (20) des Rohrs (10) ragt als der stromaufwärtige Abschnitt (16).

2. Gasleitungsrohr nach Anspruch 1, **dadurch gekennzeichnet, daß** der stromabwärtige Abschnitt (18) in Längsschnittansicht des Gasleitungsrohrs eine von außen gesehen konkave Einbuchtung ist.

3. Gasleitungsrohr nach einem der vorhergehenden Ansprüche, **dadurch gekennzeichnet, daß** beide Abschnitte (16, 18) unmittelbar aneinander angrenzend ausgeführt sind.

4. Gasleitungsrohr nach einem der vorhergehenden Ansprüche, **dadurch gekennzeichnet, daß** die Umfangswandung (12) zur Bildung der beiden Abschnitte (16, 18) und der Ausströmöffnung (14) eingedrückt ist.

5. Gasleitungsrohr nach einem der vorhergehenden Ansprüche, **dadurch gekennzeichnet, daß** die Abschnitte (16, 18) halbringförmig verlaufen und in einer Ebene (E) rechtwinklig zur Strömungsrichtung (S) ineinander übergehen.
